Europäisches Patentamt

European Patent Office

Office européen des brevets

(19)

(11) Veröffentlichungsnummer: **0 056 854**
**B1**

(12) # EUROPÄISCHE PATENTSCHRIFT

(45) Veröffentlichungstag der Patentschrift:
02.10.85

(51) Int. Cl.⁴: **F 16 B 13/00**

(21) Anmeldenummer: **81109955.5**

(22) Anmeldetag: **27.11.81**

(54) **Schlaganker.**

(30) Priorität: **28.01.81 DE 3102708**

(43) Veröffentlichungstag der Anmeldung:
**04.08.82 Patentblatt 82/31**

(45) Bekanntmachung des Hinweises auf die Patenterteilung:
**02.10.85 Patentblatt 85/40**

(84) Benannte Vertragsstaaten:
**AT BE CH FR GB IT LI NL SE**

(56) Entgegenhaltungen:
**BE - A - 716 151**
**CH - A - 379 736**
**DE - U - 1 887 484**
**DE - U - 7 100 768**
**DE - U - 7 424 831**
**DE - U - 7 612 316**
**DE - U - 7 636 399**
**US - A - 2 955 504**
**US - A - 3 014 399**

(73) Patentinhaber: **artur fischer forschung,**
**Weinhalde 14 - 18, D-7244 Waldachtal 3 (Tumlingen) (DE)**

(72) Erfinder: **Fischer, Artur, Dr., Weinhalde 34,**
**D-7244 Waldachtal 3/Tumlingen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft einen Schlaganker bestehend aus einer teilweise geschlitzten, Mittel zum Festspannen eines Gegenstandes an einem Bauwerksteil aufweisenden Metallhülse mit durchgehender, zunächst zylindrischer und dann im Bereich des zum Spreizen vorgesehenen Teils sich zum vorderen Ende hin konisch verjüngender Bohrung, in die zur Aufspreizung des Schlagankers ein Spreizkörper eintreibbar ist, der einen zylindrischen Abschnitt und daran anschließend einen sich zum vorderen Ende hin verjüngenden Kegelstumpf aufweist.

Die bekannten Schlaganker der obengenannten Art (DE-U-7 612 316, DE-U-7 424 831) weisen in der Regel ein Innengewinde auf, dessen Kernbohrung in den konischen Teil der Bohrung übergeht. In die Kernbohrung wird ein Spreizkörper eingesetzt, dessen zylindrischer Abschnitt zur Vermeidung einer Beschädigung des Innengewindes einen geringfügig kleineren Durchmesser aufweist als die Kernbohrung. Damit entsteht der Nachteil, daß beim Transport oder bei der Überkopfmontage der Spreizkörper aus der Bohrung herausfallen kann. Aus der DE-U-7 424 831 ist ein Schlaganker bekannt, dessen Spreizkörper an seiner Schlagfläche zusätzlich mit einer Einbuchtung versehen ist, die beim Einschlagen in die Hülse des Ankers einen Bund entstehen läßt. Der an sich zur Einschlagbegrenzung des Spreizkörpers im Spreizteil der Hülse dienende Bund kann durch entsprechende Schlagenergie so stark aufgebördelt werden, daß nach der Verankerung auch eine Verklemmung des Spreizkörpers im zylindrischen Teil der Bohrung der Hülse stattgefunden hat. Eine Lagesicherung des Spreizkörpers vor der Verankerung ist damit jedoch nicht erreicht.

Ein weiterer Nachteil bei den bekannten Dübeln dieser Art besteht darin, daß beim Einschlagen des Spreizkörpers kein Zug in Richtung Bohrlochgrund entsteht. Damit benötigen die bekannten Schlaganker ein Innen- oder Außengewinde, um durch Eindrehen einer Schraube bzw. Aufdrehen einer Mutter einen axialen Zug zum Festspannen eines Gegenstandes an einer Bauwerksfläche zu erreichen.

Der Erfindung liegt die Aufgabe zugrunde, einen Schlaganker zu schaffen, bei dem die oben erwähnten Nachteile vermieden sind.

Erfindungsgemäß wird dies dadurch erreicht, daß am zylindrischen Abschnitt des Spreizkörpers den Spreizkörper im zylindrischen Teil der Bohrung der Metallhülse verklemmende Mittel wie Rändelung, Rippen, Vorsprünge oder dgl. zur Lagesicherung vor dem Spreizen angeordnet sind.

Durch die am zylindrischen Abschnitt des Spreizkörpers vorgesehenen Mittel bspw. eine Rändelung, Rippen, Vorsprünge oder dgl. ist es möglich, den Spreizkörper in der Bohrung der Metallhülse festzuklemmen. Damit ist der Spreizkörper gegen Herausfallen sowohl beim Transport als auch bei der Überkopfmontage gesichert. Durch entsprechende Ausprägung der Rändelung, Rippen, Vorsprünge oder dgl. ist der Haftsitz des Spreizkörpers in der Bohrung der Metallhülse einstellbar. Je stärker der Haftsitz des Spreizkörpers in der Dübelhülse ist, desto stärker ist der Zug des Dübels in Richtung Bohrlochgrund beim Eintreiben des Spreizkörpers.

Gemäß einer weiteren Ausgestaltung der Erfindung kann der hintere Teil der Metallhülse zur Bildung eines Flansches nach außen umgebördelt sein. Durch diese Maßnahme in Verbindung mit dem durch das Festklemmen des Spreizkörpers erreichten Zuges des Dübels in Richtung Bohrlochgrund ist das Festspannen eines Gegenstandes an der Bauwerksaußenfläche möglich. Zur Befestigung von Holzlatten kann der Haftsitz so stark eingestellt werden, daß der Zug beim Eintreiben des Spreizkörpers ausreicht, den an der Metallhülse angeordneten Flansch in die Latte bündig einzuziehen.

In einer weiteren Ergänzung der Erfindung kann zwischen dem Flansch und einer an der Außenfläche der Metallhülse angeordneten Schulter eine Scheibe verspannt sein. Mit dieser Maßnahme wird die Auflagefläche des Flansches vergrößert, so daß auch Gegenstände aus weichen Materialien ausreichend verspannt werden können.

Schließlich kann in einer weiteren Ergänzung der Erfindung der hintere Teil der Metallhülse mit einem Innengewinde versehen sein, dessen Kernbohrung geringfügig größer ist als der Teil der Bohrung, in dem der Spreizkörper festgeklemmt ist. Diese Gestaltung ermöglicht es, den bspw. mit einer Rändelung versehenen Spreizkörper in der Metallhülse festzuklemmen, ohne daß beim Einschieben des Spreizkörpers durch die Kernbohrung des Innengewindes das Gewinde durch die Rändelung zerstört wird.

In der Zeichnung sind Ausführungsbeispiele der Erfindung dargestellt. Es zeigt
Fig. 1 den in einem Bauwerksteil eingesetzten Schlaganker mit Innengewinde,
Fig. 2 den Schlaganker mit umgebördeltem Flansch zur Lattenbefestigung,
Fig. 3 den Schlaganker mit Flansch und einer unterlegten Scheibe.

Der Schlaganker 1 besteht aus einer Metallhülse 2 mit Bohrung 3, die zum vorderen Ende hin konisch verjüngt ist. Im hinteren Bereich der Bohrung ist ein Innengewinde 4 vorgesehen. Im Anschluß an die Kernbohrung des Innengewindes 4 folgt ein im Durchmesser reduzierter Abschnitt 3a, in dem der Spreizkörper 5 festgeklemmt ist. Zu diesem Zweck weist der zylindrische Abschnitt des Spreizkörpers 5 eine Rändelung 6 auf. Zur Verankerung des Schlagankers 1 wird der Spreizkörper 5 in den sich verjüngenden Teil 3b der Bohrung 3 eingetrieben, so daß die durch die Schlitze 7 entstehenden Spreizsegmente 8 gegen die Außenwandung des Bohrloches 9 gepreßt werden.

Zum Festspannen eines Gegenstandes bspw.

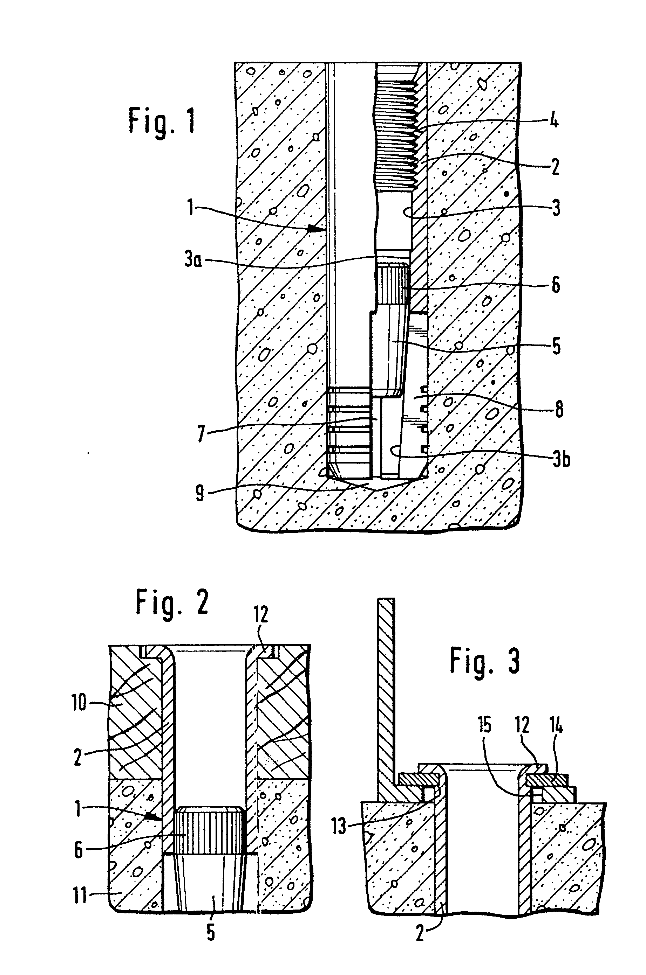

einer Holzlatte 10 an einem Bauwerksteil 11 ist die Metallhülse 2 des Schlagankers 1 nach Fig. 2 mit einem Flansch 12 versehen, der durch Umbördeln der Stirnseite der Metallhülse 2 hergestellt ist. Durch eine starke Ausprägung der Rändelung 6 am Spreizkörper 5 ist beim Eintreiben des Spreizkörpers ein derart starker Zug erreichbar, daß der Flansch 12 in die Holzlatte 10 eingezogen wird.

Zur Erzielung einer größeren Überdeckung bzw. Auflagefläche ist gemäß Fig. 3 zwischen dem Flansch 12 und einer an der Außenfläche der Metallhülse 2 angeordneten Schulter 13 eine Scheibe 14 verspannt. Damit können auch Gegenstände befestigt werden, die aus einem sehr weichen Material bestehen oder deren Durchgangsbohrung 15 größer ist als der Durchmesser des Flansches 12.

## Patentansprüche

1. Schlaganker (1) bestehend aus einer teilweise geschlitzten, Mittel (4, 12, 14) zum Festspannen eines Gegenstandes (10) an einem Bauwerksteil (11) aufweisenden Metallhülse (2) mit durchgehender, zunächst zylindrischer und dann im Bereich des zum Spreizen vorgesehenen Teils sich zum vorderen Ende hin konisch verjüngender Bohrung (3), in die zur Aufspreizung des Schlagankers ein Spreizkörper (5) eintreibbar ist, der einen zylindrischen Abschnitt und daran anschließend einen sich zum vorderen Ende hin verjüngenden Kegelstumpf aufweist, dadurch gekennzeichnet, daß am zylindrischen Abschnitt des Spreizkörpers (5) den Spreizkörper (5) im zylindrischen Teil (3a) der Bohrung (3) der Metallhülse (2) verklemmende Mittel (6) wie Rändelung, Rippen, Vorsprünge oder dgl. zur Lagesicherung vor dem Spreizen angeordnet sind.

2. Schlaganker nach Anspruch 1, dadurch gekennzeichnet, daß der hintere Teil der Metallhülse (2) zur Bildung eines Flansches (12) nach außen umgebördelt ist.

3. Schlaganker nach Anspruch 1, dadurch gekennzeichnet, daß zwischen dem umgebördelten Flansch (12) und einer an der Außenfläche der Metallhülse (2) angeordneten Schulter (13) eine Scheibe (14) verspannt ist.

4. Schlaganker nach Anspruch 1, dadurch gekennzeichnet, daß der hintere Teil der Metallhülse (2) mit einem Innengewinde (4) versehen ist, dessen Kernbohrung geringfügig größer ist als der Teil (3a) der Bohrung (3), in dem der Spreizkörper (5) festgeklemmt ist.

## Claims

1. Impact anchor (1) comprising a partially slotted metal sleeve (2) having means (4, 12, 14) for securing an article (10) to a structural member (11) and having a through-bore (3) which is at first cylindrical and then, in the region of the portion intended for expansion, tapers conically towards the forward end and into which, for the purpose of expanding the impact anchor, there can be driven an expander element (5) having a cylindrical portion and, adjoining that portion, a truncated cone portion that tapers towards the forward end, characterised in that there are arranged on the cylindrical portion of the expander element (5) means (6), such as knurls, ribs, projections or the like, for holding the expander element (5) securely in position in the cylindrical portion (3a) of the bore (3) of the metal sleeve (2) before expansion.

2. Impact anchor according to claim 1, characterised in that the rear portion of the metal sleeve (2) is turned over towards the outside to form a flange (12).

3. Impact anchor according to claim 1, characterised in that a plate (14) is clamped between the turned-over flange (12) and a shoulder (13) arranged on the external surface of the metal sleeve (2).

4. Impact anchor according to claim 1, characterised in that the rear portion of the metal sleeve (2) is provided with an internal screw thread (4) of which the core bore is slightly larger than the portion (3a) of the bore (3) in which the expander element (5) is clamped.

## Revendications

1. Cheville d'ancrage (1) mise en place par percussion, composée d'un manchon métallique (2) partiellement fendu, présentant des éléments (4, 12, 14) destinés à fixer un objet (10) à un élément (11) d'une construction et percé de part en part d'un alésage (3) qui est d'abord cylindrique, puis qui se rétrécit coniquement vers son extrémité antérieure, à hauteur de l'organe destiné à dilater ce manchon et dans lequel peut être chassé l'organe écarteur (5) destiné à dilater la cheville et comportant une partie cylindrique à laquelle se raccorde un tronc de cône s'amincissant vers cette extrémité antérieure, cheville caractérisée en ce que la partie cylindrique de l'organe écarteur (5) présente des éléments tels qu'un moletage, des cannelures, des protubérances ou éléments analogues, destinés à bloquer cet organe (5) dans la partie cylindrique (3a) de l'alésage (3) du manchon métallique, de façon à le maintenir en place avant l'expansion.

2. Cheville d'ancrage selon la revendication 1, caractérisée en ce que la partie postérieure du manchon métallique (2) est rabattue vers l'extérieur de façon à former une collerette (12).

3. Ceville d'ancrage selon la revendication 1, caractérisée en ce qu'une rondelle (14) est serrée entre la collerette rabattue (12) et un épaulement (13) façonné dans la surface extérieure de manchon métallique (2).

4. Cheville d'ancrage selon la revendication 1, caractérisée en ce que la partie postérieure du manchon métallique (2) comporte un filetage intérieur (4), dont le diamètre intérieur est légèrement plus grand que celui de la partie (3a) de l'alésage (3) dans laquelle l'organe écarteur (5) est bloqué.

Fig. 1

Fig. 2

Fig. 3